# EUROPÄISCHE PATENTANMELDUNG

(11) **EP 1 255 218 A1**
(43) Veröffentlichungstag der Anmeldung: **06.11.2002**
(21) Anmeldenummer: 01110880.0
(22) Anmeldetag: 04.05.2001
(51) Int. Cl.: G06K 7/10, G06K 19/06, G06F 3/03

(54) **Verfahren und Vorrichtung zur Interaktion mit einem Druckerzeugnis**

(71) Anmelder: VLS Virtual Laser Systems AG, 82152 Krailling (DE); Axel Springer Verlag AG, 20350 Hamburg (DE)
(72) Erfinder: Richter, Wolfgang, 82110 Germering (DE); Jastorff, Martin Dr., 22391 Hamburg (DE)
(74) Vertreter: Schmidt, Steffen J., Dipl.-Ing.

(57) **Zusammenfassung**

Die vorliegende Erfindung stellt ein Verfahren und eine Vorrichtung zur Interaktion mit einem Druckerzeugnis, wie z. B. einer Zeitung oder einem Katalog, bereit. Zur Interaktion mit einem Druckerzeugnis werden mittels einer Sensoreinrichtung Referenzmuster erfaßt, die auf dem Druckerzeugnis angeordnet sind und Steueranweisungen sowie Parameter zum Betrieb der Interaktionsvorrichtung aufweisen. Die erfaßten Referenzmuster werden an eine Steuereinheit übertragen, die aus den empfangenen Referenzmuster darin enthaltene Informationen/Daten ermittelt. Zur Rückmeldung über eine durchgeführte Interaktion mit dem Drukkerzeugnis werden in Abhängigkeit von den aus der Steuereinheit erhaltenen Daten Informationen an einen Benutzer der Interaktionsvorrichtung optisch und/oder akustisch wiedergegeben.

## Beschreibung

### Gebiet der Erfindung

Die vorliegende Erfindung betrifft ein Verfahren und eine Vorrichtung, die es einem Benutzer eines Druckerzeugnisses, wie z. B. einer Zeitung, einer Zeitschrift, eines Kataloges und dergleichen, ermöglichen, mit diesem im technischen Sinne in Interaktion zu treten. Ferner betrifft die vorliegende Erfindung ein entsprechendes System zur Interaktion mit einem Druckerzeugnis sowie ein interaktives Druckerzeugnis.

### Hintergrund der Erfindung

Bei technischen Medien, wie z. B. dem Internet, ist es möglich, im technischen Sinn zu interagieren. Dem gegenüber es bei einer Verwendung von mittels Druckerzeugnissen bereitgestellten Informationen erforderlich ist, daß die Benutzer, d.h. die Leser, auf der Grundlage von für sie interessanten Informationen weitere Maßnahmen ergreifen. So ist es beispielsweise notwendig, daß ein Leser einer Zeitung, die Inserate für Produkte und Dienstleistungen enthält, das Geschäft bzw. Ladenlokal von Anbietern inserierter Waren und Dienstleistungen aufsuchen muß, wenn er weitere Informationen über die Waren und Dienstleistungen erhalten oder das Produkt erwerben bzw. die Dienstleistung in Anspruch nehmen möchte. Hierfür kann der Leser auch den entsprechenden Anbieter telefonisch oder unter Verwendung des Internets kontaktieren. Insbesondere verglichen mit den interaktiven Möglichkeiten des Internets stellt dies einen Nachteil für Druckerzeugnisse dar.

Ferner nehmen Druckerzeugnisse unter den verfügbaren Medienangeboten, wie z. B. Rundfunk, Fernsehen, Telefondiensten, Internetdiensten usw., eine besondere Stellung ein. Im Gegensatz zu diesen zum Teil in hohem Maße vernetzten, integrierten und interaktiven Medien stellen Druckerzeugnisse ein "isoliertes" Medium dar, da sie eine Interaktion und Integration im technischen Sinne insbesondere mit anderen technischen System und Medien nicht ermöglichen. Um Druckerzeugnisse, genauer von diesen bereitgestellte Informationen, in Verbindung mit den genannten anderen Medien nutzen zu können, müssen die Leser die Informationen selbst in andere Medien übertragen und entsprechende Maßnahmen einleiten.

Bisher beschränken sich Interaktionen mit Druckerzeugnissen, wie z. B. Zeitungen, Zeitschriften, Büchern und dergleichen, im allgemeinen auf eine Verwendung derselben im nicht technischen Sinn, wie z. B. Lesen, Umblättern von Seiten, Ausfüllen von Bestell- und Antwortvordrucken, mentales und schriftliches Beantworten von Rätseln und Quizfragen usw. Ferner ist es bekannt, Druckerzeugnisse mit Strichcodes oder Barcodes zu versehen, die unter Verwendung entsprechender Lesegeräte erfaßt werden können, um beispielsweise Videorecorder zu programmieren. Ferner ist es aus der WO 98/51035, der WO 99/13391 und der WO 00/60484 bekannt, maschienlesbare Codes, die mit Strichcodes und Barcodes vergleichbar sind, oder alphanumerische Zeichen mit einem Lesegerät (Scanner) zu erfassen, um aus den erfaßten Codes oder Zeichen Netzwerkadressen (URL) zum Zugriff auf andere Rechnersysteme über das Internet zu erhalten. Die erhaltene Internetadresse wird von einem Rechnersystem verwendet, um eine Netzwerkverbindung zu dem der Netzwerkadresse entsprechenden Rechnersystem aufzubauen. Eine vergleichbare Vorgehensweise ist aus der WO 98/20411 bekannt.

Darüber hinausgehende Möglichkeiten, von Druckerzeugnissen bereitgestellte Informationen auf technische Weise zu nutzen und Druckerzeugnisse als technische interaktive Medien bereitzustellen und zu verwenden, sind nicht bekannt.

### Aufgabe der Erfindung

Aufgabe der vorliegenden Erfindung ist es, Lösungen bereitzustellen, die es ermöglichen, Druckerzeugnisse als interaktive Medien zu nutzen. Ferner soll es die vorliegende Erfindung erlauben, Druckerzeugnisse als vernetzbares und integrierbares Medium zu verwenden.

### Kurzbeschreibung der Erfindung

Hierfür stellt die Erfindung ein Verfahren zur Interaktion mit einem Druckerzeugnis bereit, bei dem ein auf einem Druckerzeugnis angeordnetes sogenanntes Referenzmuster auf technische Weise erfaßt wird. Das auf dem Druckerzeugnis angeordnete (z. B. aufgedruckte oder aufgeklebte) Referenzmuster dient dazu, dem Leser anzuzeigen, daß er mit dem Druckerzeugnis oder Teilen desselben in Interaktion treten kann. Andererseits beinhaltet das Referenzmuster Steueranweisungen und Parameter zur Durchführung der Interaktion mit dem Druckerzeugnis.

Vorzugsweise wird hierfür eine Interaktionsvorrichtung zur Interaktion mit Druckerzeugnissen verwendet, die eine Sensoreinheit zum Erfassen des Referenzmusters und eine Steuereinheit zum Verarbeiten des Referenzmusters aufweist. Aus dem erfaßten Referenzmuster werden durch die Steuereinheit die von diesem bereitgestellten Steueranweisungen und Parameter ermittelt und die Parameter in Abhängigkeit der Steueranweisungen verarbeitet, um die Interaktionsvorrichtung so zu steuern, daß ein Benutzer das Druckerzeugnis im technischen Sinn interaktiv nutzen kann.

Die für einen solchen Betrieb der Interaktionsvorichtung erforderlichen Daten können in Form der Steueranweisungen und Parameter durch das Referenzmuster bereitgestellt werden. Weist die Interaktionsvorrichtung ein oder mehrere Steuerprogramme, z.B. als Softwareprogramme oder fest verdrahtete Betriebsinformationen, auf, können das oder eines oder mehrere der Steuerprogramme in Abhängigkeit des Referenzmusters ausgewählt und das (die) ausgewählte(n) Steuerprogramm(e) ausgeführt werden, um die Interaktionsvorrichtung zu steuern, wobei die Parameter des Referenzmusters als Parameter für das (die) Steuerprogramm(e) dienen können.

Ferner ist eine Kombination dieser Steuerungsarten vorgesehen, die es erlaubt, für bestimmte Interaktionen mit dem Druckerzeugnis, die beispielsweise häufig auftreten, entsprechende Steuerprogramme durch die Interaktionsvorrichtung bereitzustellen, wobei auch einfache Referenzmuster verwendet werden können. Unter einfachen Referenzmustern sind in diesem Zusammenhang Referenzmuster zu verstehen, die Steueranweisungen und/oder Parameter geringer Komplexität wiedergeben. Interaktionen, die beispielsweise selten auftreten oder neu angeboten werden, können mittels der Referenzmuster ermöglicht werden.

Zur interaktiven Nutzung des Druckerzeugnisses kann eine Datenübertragungsverbindung mit einem Datenverarbeitungssystem in Abhängigkeit des Referenzmusters und/oder, gegebenenfalls, von Steuerprogrammen aufgebaut werden, wobei eine Schnittstelleneinheit der Interaktionsvorrichtung verwendet wird.

In diesem Fall ist es möglich, über die Schnittstelleneinheit Daten zu dem Datenverarbeitungssystem zu übertragen, wobei die übertragenen Daten wenigstens teilweise von dem Referenzmuster und/oder von den Steuerprogrammen abhängen.

Sowohl der Aufbau der Datenübertragungsverbindung als auch die Übertragung der Daten zu dem Datenverarbeitungssystem kann mittels akustischer, elektrischer, elektromagnetischer Signale und/oder drahtlos erfolgen.

Ferner können Daten, die wenigstens teilweise von dem Referenzmuster und/oder von den Steuerprogrammen abhängen, einem Benutzer des Druckerzeugnisses zur Interaktion mit diesem bereitgestellt werden, indem die Daten unmittelbar dem Benutzer verfügbar und nutzbar gemacht werden. Hierbei werden die Daten für den Benutzer vorzugsweise optisch und/oder akustisch bereitgestellt, um die Daten auch lesbar und/oder hörbar machen zu können.

Vorzugsweise wird das Referenzmuster optisch erfaßt, wobei die Erfassung von Referenzmustern vorgesehen ist, die die Steueranweisungen und Parameter in digitaler und/oder analoger Form und/oder mittels Farbe codieren.

Zur Durchführung des erfindungsgemäßen Verfahrens können auch Eingaben eines Benutzers des Druckerzeugnisses mittels einer Schnittstelleneinheit der Interaktionsvorrichtung in Abhängigkeit des Referenzmusters und/oder von Steuerprogrammen der Interaktionsvorrichtung erfaßt und verarbeitet werden, um die Interaktionsvorrichtung entsprechend zu steuern.

Ferner ist es vorgesehen, Signale und/oder Daten eines Datenkommunikationssystems in Abhängigkeit des Referenzmusters und/oder von Steuerprogrammen der Interaktionsvorrichtung und/oder der Benutzereingaben zu erfassen und zu verarbeiten, um die Interaktionsvorrichtung im Sinne einer technischen Interaktion mit dem Druckerzeugnis zu steuern.

Des weiteren stellt die vorliegende Erfindung eine Vorrichtung zur Interaktion mit einem Druckerzeugnis bereit, die eine Sensoreinheit aufweist, um ein sogenanntes Referenzmuster eines Druckerzeugnisses zu erfassen. Die Sensoreinheit gibt das Referenzmuster wiedergebende Signale an eine Steuereinheit aus, die diese empfängt und verarbeitet. Auf der Grundlage der von der Sensoreinheit ausgegebenen Signale ermittelt die Steuereinheit Daten, die die von dem Referenzmuster bereitgestellten Steueranweisungen und Parameter wiedergeben. In Abhängigkeit von den ermittelten Daten, insbesondere in einer durch die Steueranweisungen spezifizierten Weise von den Parametern, steuert die Steuereinheit den Betrieb der erfindungsgemäßen Interaktionsvorrichtung zur Interaktion mit dem Druckerzeugnis.

Ferner kann der Steuereinheit ein Steuerprogramm zugeordnet sein, wobei die Steuereinheit das Steuerprogramm in Abhängigkeit des Referenzmusters zur Steuerung der Interaktionsvorrichtung ausführt.

Ferner kann die erfindungsgemäße Interaktionsvorrichtung eine Schnittstelleneinheit aufweisen, um Datenübertragungsverbindungen mit anderen System und Vorrichtungen aufzubauen. Zum Aufbau einer Datenübertragungsverbindung werden von der Schnittstelleneinheit in Abhängigkeit des Referenzmusters und/oder des Steuerprogrammes Signale ausgegeben.

Ferner ist es vorgesehen, daß die Schnittstelleneinheit in Abhängigkeit des Referenzmusters und/oder des Steuerprogrammes Signale über die aufgebaute Datenübertragungsverbindung ausgibt.

Außerdem können die Signale, die von der Schnittstelleneinheit zum Aufbau einer Datenübertragungsverbindung und nach einem Aufbau derselben ausgegeben werden, auch von anderen der erfindungsgemäßen Interaktionsvorrichtung zugeordneten Daten abhängen. Wie aus der folgenden Beschreibung ersichtlich, umfassen solche der erfindungsgemäßen Interaktionsvorrichtung zugeordnete Daten in dieser gespeicherte Daten, von anderen Systemen und Vorrichtungen der erfindungsgemäßen Interaktionsvorrichtung bereitgestellte Daten und von einem Benutzer eingegebene Daten.

Vorzugsweise weist die Schnittstelleneinheit eine Einrichtung auf, die ausgelegt ist, mittels einer akustischen und/oder induktiven Kopplung Signale zum Aufbau einer Datenübertragungsverbindung und zur Übertragung von Daten auszugeben. Hierfür können beispielsweise Lautsprecher und/oder Induktionsspulen umfassende Einrichtungen verwendet werden.

Vorzugsweise weist die Schnittstelleneinheit ferner eine oder mehrere Einrichtungen auf, um in Abhängigkeit des Referenzmusters und/oder des Steuerprogrammes und/oder den der erfindungsgemäßen Interaktionsvorrichtung zugeordneten Daten Daten/Signale an andere Vorrichtungen und Systeme zu übertragen. So kann beispielsweise eine Funkeinrichtung verwendet werden, die eine Datenverbindung zu einem Telefonnetzwerk und/oder einem Rechnernetzwerk, wie z.B. dem Internet, herstellen kann. Ergänzend oder alternativ kann die Schnittstelleneinheit auch eine Einrichtung aufweisen, die gemäß dem Bluetooth-Standard arbeitet. Ferner ist es vorgesehen, Infrarotschnittstellen, Hardware-Schnittstellen und dergleichen zur Datenkommunikation zu verwenden.

Ferner kann die Schnittstelleneinheit, insbesondere einzelne, mehrere oder alle der genannten Einrichtungen derselben, ausgelegt sein, um Daten/Signale zu empfangen. Vorzugsweise können Daten/Signale empfangen werden, die mit erfindungsgemäßen Referenzmusters und/oder mit solche wiedergebenden Signalen vergleichbar sind. Derartige empfangene Daten/Signale können von der erfindungsgemäßen Interaktionsvorrichtung wie ein mittels der Sensoreinheit erfaßter Referenzmuster verarbeitet werden. Um beliebige Daten/Signale zu verarbeiten, ist die erfindungsgemäße Interaktionsvorrichtung und insbesondere deren Steuereinheit entsprechend auszuführen und zu betreiben.

Vorzugsweise umfaßt die Sensoreinheit eine optische Sensoreinrichtung mit einem oder mehreren optischen Sensoren, um durch optisches Abtasten des Referenzmusters dieses zu erfassen. Die optische Sensoreinrichtung ermöglicht es, Referenzmuster zu verwenden, die, vergleichbar zu Texten, graphischen Darstellungen, Bildern und dergleichen, auf das Druckerzeugnis aufgedruckt werden.

Ferner kann die Sensoreinheit so ausgelegt sein, daß sie Referenzmuster eines Druckerzeugnisses erfassen kann, die Informationen/Daten in digitaler und/oder analoger Form und/oder mittels Farbe codieren.

Mittels einer Bedienungseinheit kann die erfindungsgemäße Interaktionsvorrichtung durch einen Benutzer gesteuert werden, wobei die Bedienungseinheit vorzugsweise auch zur Eingabe von Daten dient. Hierfür kann die Bedienungseinheit beispielsweise eine Einrichtung zur Spracherkennung, berührempfindliche Bedienelemente (Sensoren), Dreh- und Druckschalter, Taster, Schieberegler und dergleichen aufweisen. Bei Verwendung eines Tasters kann die Steuerung und die Eingabe von Daten durchgeführt werden, indem eine Betätigung (Drücken) des Tasters innerhalb einer vorbestimmten Zeitperiode eine Bestätigung ("Ja") darstellt, während eine fehlende Betätigung des Tasters oder eine Betätigung des Tasters nach der vorbestimmten Zeitperiode als Ablehnung ("Nein") ausgelegt wird.

Ferner kann eine Speichereinheit verwendet werden, um das Referenzmuster wenigstens teilweise, von einem Benutzer eingegebene Daten, benutzerspezifische personenbezogene Daten (z.B. Adressen, Bankverbindungen, Kreditkartennummern, Kleidergrößen, etc.) und/oder Daten zu speichern, die einen Benutzer in anonymisierender Weise charakterisieren. Daten zum Betrieb der erfindungsgemäßen Interaktionsvorrichtungen, wie zum Beispiel Softwareprogramme, können von der Speichereinheit oder einer anderen Speichereinrichtung bereitgestellt werden oder festverdrahtet vorliegen.

Ferner kann die Speichereinheit verwendet werden, um Daten zur Erzeugung synthetischer Sprachsignale zu speichern. Hierbei kann die Speichereinheit Daten, die zur Erzeugung synthetischer Sprachsignale in Abhängigkeit des erfaßten Referenzmusters kombiniert werden, vollständige Sprachsequenzen wiedergebende Daten, die in Abhängigkeit des erfaßten Referenzmusters ausgewählt werden, und Daten zur Erzeugung synthetischer Sprachsignale aufweisen, die von der Steuereinheit aus dem erfaßten Referenzmuster ermittelt wurden.

Zur Wiedergabe von dem Benutzer bereitzustellenden Informationen kann die Schnittstelleneinheit Ausgabeeinrichtungen aufweisen, um unter Steuerung der Steuereinheit optische Signale, akustische Signale und/oder Sprachsignale (Leuchtdioden, Summer, Lautsprecher, etc.) und/oder graphische und/oder alphanumerische Daten (z.B. LCD-Display) auszugeben. Dies kann in Abhängigkeit des Referenzmusters und/oder des Steuerprogrammes und/oder von in der Speichereinheit vorliegenden Daten durchgeführt werden.

Vorzugsweise können Ausgabeeinrichtungen der Schnittstelleneinheit zur Ausgabe akustischer Signale auch als die oben genannte Einrichtung zum Aufbau einer Datenübertragungsverbindung und zur Übertragung von Daten/Signalen mittels einer akustischen Kopplung verwendet werden, und umgekehrt.

Ferner stellt die vorliegende Erfindung ein System zur Interaktion mit einem Druckerzeugnis, das gemäß dem erfindungsgemäßen Interaktionsverfahren betrieben wird und/oder die erfindungsgemäße Interaktionsvorrichtung aufweist, sowie ein interaktives Druckerzeugnis bereit, das zur Verwendung mit dem erfindungsgemäßen Interaktionsverfahren, mit der erfindungsgemäßen Interaktionsvorrichtung und/oder dem erfindungsgemäßen Interaktionssystem ausgelegt ist.

Weitere Merkmale und Vorteile der vorliegenden Erfindung ergeben sich aus den beigefügten Ansprüchen.

### Kurzbeschreibung der Figuren

Bei der folgenden Beschreibung bevorzugter Ausführungsformen wird auf die beigefügten Figuren Bezug genommen, von denen zeigen:
- Fig. 1: eine schematische Darstellung eines Druckerzeugnisses mit einem darauf angeordneten erfindungsgemäßen Referenzmuster,

- Fig. 2: eine schematische Darstellung einer erfindungsgemäßen Vorrichtung zur Interaktion mit einem Druckerzeugnis,
- Fig. 3: eine schematische Darstellung einer Ausführungsform eines erfindungsgemäßen Systems zur Verwendung mit interaktiven Druckerzeugnissen,
- Fig. 4: Flußdiagramme, die Abläufe erfindungsgemäßer Interaktionen mit einem Druckerzeugnis darstellen, und
- Fig. 5: eine weitere Ausführungsform eines erfindungsgemäßen Systems zur Verwendung mit interaktiven Druckerzeugnissen.

### Beschreibung bevorzugter Ausführungsformen

In der folgenden Beschreibung bevorzugter Ausführungsformen werden zur Interaktion mit einem Druckerzeugnis verwendete Referenzmuster, Vorrichtungen zur Interaktion mit einem Druckerzeugnis sowie deren Komponenten, und Systeme zur Verwendung mit interaktiven Druckerzeugnissen und zur Integration derselben in andere als Medien verwendete Systeme erläutert.

### Referenzmuster

Sogenannte Referenzmuster werden zur Interaktion mit einem Druckerzeugnis auf diesem angeordnet (z.B. aufgedruckt, aufgeklebt, etc.). Die Referenzmuster umfassen graphische und/oder strukturelle Elemente, die optisch auswertbar sind. In Abhängigkeit von beispielsweise der Art des Herstellungsverfahrens des betreffenden Druckerzeugnisses, dessen Materials, der Ausführung einer Vorrichtung zur Interaktion mit dem Druckerzeugnis und dergleichen können die Referenzmuster Zeichen, (miniaturisierte) Strukturen, Raster und dergleichen aufweisen, die optisch auswertbar sind und Informationen/Daten in analoger und/oder digitaler Form und/oder mittel Farbe codiert bereitstellen. Vorteilhafterweise werden die Referenzmuster so ausgeführt, daß sie im Rahmen des herkömmlichen Herstellungsvorganges des jeweiligen Druckerzeugnisses hergestellt werden können.

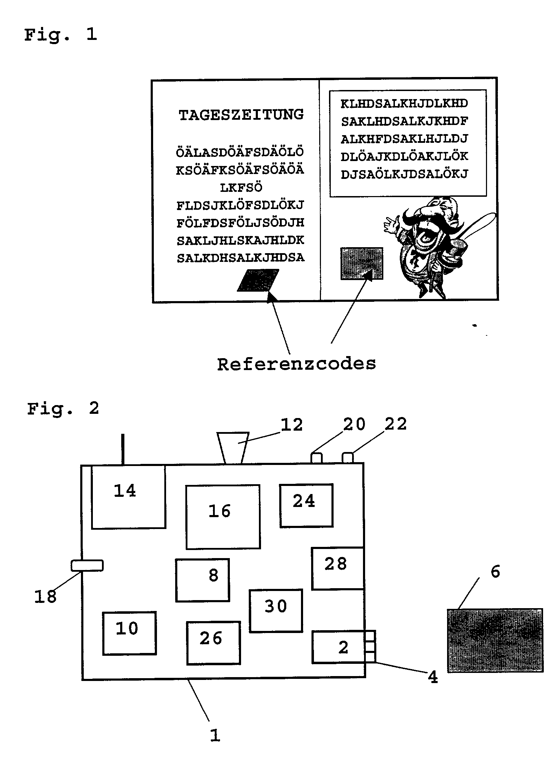

Ferner sind die Referenzmuster so ausgeführt, daß sie einem Benutzer (Leser) des Druckerzeugnisses erkennbar angeben, daß eine interaktive Verwendung des Druckerzeugnisses möglich ist. Eine geeignete Zuordnung der Referenzmuster zu entsprechenden Passagen des Druckerzeugnisses stellt eine zusätzliche Erleichterung dar. Dies ist exemplarisch in Fig. 1 gezeigt.

Die mittels der Referenzmuster codierten Informationen/Daten umfassen Steueranweisungen und Parameter, die, wie im folgenden erläutert, beim Betrieb der Vorrichtung zur Interaktion mit einem Druckerzeugnis (im folgenden kurz Interaktionsvorrichtung) und bei der Interaktion mit diesem verwendet werden.

Die Steueranweisungen geben unter anderem an, welchen Parametertyp die jeweiligen Parameter aufweisen und wie Parameter von der Interaktionsvorrichtung weiter zu verarbeiten und zu verwenden sind. Parameter können beispielsweise eine einem Benutzer zugeordnete und diesen kennzeichnende Kennung (Benutzer-ID) wiedergeben, die bei einer erstmaligen Benutzung einer Interaktionsvorrichtung durch Erfassen eines entsprechenden Referenzmusters ermittelt und gespeichert werden. Ein solches Referenzmuster kann beispielsweise auf einem Begleitschreiben, einer Bedienungsanleitung und dergleichen angeordnet sein, die Benutzer beim Erwerb oder Lieferung einer Interaktionsvorrichtung erhalten. Eine solche Benutzerkennung wird in einer Interaktionsvorrichtung gespeichert, um diese zu initialisieren, und, wie im folgenden beschrieben, bei einem Betrieb der Interaktionsvorrichtung verwendet, um deren Benutzer zu identifizieren. Hierbei ist es vorgesehen, daß die Benutzer-IDs aus Sicherheitsgründen keine personenbezogenen Informationen, wie z.B. Namen und Adressen, aufweisen. Die Benutzer-IDs können, wenn sie beispielsweise an einen Zeitungsverlag oder einen Anbieter von in einer Zeitung beworbenen Waren oder Dienstleistungen übermittelt werden, verwendet werden, um durch einen Vergleich mit einer entsprechenden Datenbasis, die Benutzer-IDs entsprechenden personenbezogenen Daten zuordnet, den jeweiligen Benutzer zu identifizieren. Eine Authentifizierung eines Benutzers kann durch eine Übermittlung weiterer Kenndaten, wie z.B. persönlicher Identifizierungscodes, PIN-Nummern, TAN-Nummern und dergleichen, erfolgen, die von Benutzern, auch unabhängig von ihren Interaktionsvorrichtungen, beispielsweise durch Spracheingabe oder mittels Tasten eines Telefons bereitgestellt werden.

Ferner ist es vorgesehen, daß Parameter der Referenzmuster Telefonrufnummern in Form von DTMF-Signalen oder Daten zur Erzeugung von DTMF-Signalen (DTMF = Dual Tone Multi Frequency; Doppelton bei Tastenwahl) wiedergeben, die von Interaktionsvorrichtungen verwendet werden, um, wie im folgenden beschrieben, gewünschte Telefonverbindungen aufzubauen.

Parameter können auch sogenannte Referenznummern für Waren, Informationen und/oder Dienstleistungen charakterisieren. Solche Referenznummern können beispielsweise in Form von DTMF-Signalen, digitalen Signalen, Sprachsignalen usw. über eine von einer Interaktionsvorrichtung aufgebauten Telefonverbindung übermittelt und/oder einem Benutzer durch die Interaktionsvorrichtung bereitgestellt werden.

Zusätzlich sind sogenannte Feedback-Codes wiedergebende Parameter vorgesehen, mit denen ein Benutzer z.B. bestimmten kann, auf welche Weise er gewünschte Informationen erhalten möchte (z.B. per SMS-Nachricht, E-Mail, telefonischer Rückruf, Antwortschreiben), und wie gewünschte Waren und Dienstleistungen zugestellt bzw. bereitgestellt werden sollen. Solche Feedback-Codes können vergleichbar zu den oben beschriebenen Benutzer-IDs bei einer Initialisierung von Interaktionsvorrichtungen abgespeichert werden. Im Gegensatz zu den Benutzer-IDs, die aus Sicherheitsgründen nur für autorisierte Benutzer geändert werden können sollten, sollten bei einer Initialisierung erfaßte Feedback-Codes auf einfache Weise zu ändern sein, um den aktueilen Bedürfnissen der Benutzer Rechnung zu tragen. Alternativ oder ergänzend zu bei einer Initialisierung gespeicherten Feedback-Codes können auch bei einer aktuellen Verwendung einer Interaktionsvorrichtung erfaßte Feedback-Codes verwendet werden, die beispielsweise einer aktuell erfaßten DTMF-Rufnummer oder Referenznummer zugeordnet sind.

Ferner können auch Referenzmuster mit Parametern bereitgestellt werden, die als benutzerspezifische Daten in Interaktionsvorrichtungen abgespeichert werden. Beispiele für derartige benutzerspezifische Daten sind die Kleidungsgrößen, das Alter, das Gewicht etc. eines Benutzers, dessen bevorzugte Farben bzw. Farbkombinationen für Waren und dessen bevorzugte Musikrichtung oder Literatur.

Die Menge und Komplexität von von einer Interaktionsvorrichtung zu verarbeitenden und/oder zu speichernden von Parametern wiedergegebenen Informationen/Daten ist bei der Auslegung und dem Aufbau von Interaktionsvorrichtungen zu berücksichtigen. Um einen einfachen Aufbau der Interaktionsvorrichtungen sowie einen einfachen Betrieb derselben zu erreichen, kann es vorteilhaft sein, Feedback-Codes und/oder benutzerspezifische Daten auf der Grundlage einer vor nicht autorisierten Zugriffen geschützten Datenbasis zu ermitteln. Vergleichbar zu der Bestimmung personenbezogener Daten können hierfür die jeweiligen in Interaktionsvorrichtungen gespeicherten Benutzer-IDs verwendet werden.

Eine weitere Vereinfachung kann erreicht werden, wenn, vergleichbar zu einer Benutzer-ID, eine DTMF-Rufnummer in einer Interaktionsvorrichtung gespeichert wird. In diesem Fall wird für eine Übermittlung von einzelnen oder mehreren Referenznummern die gespeicherte DTMF-Rufnummer verwendet, um eine Telefonverbindung zu einem entsprechenden Empfänger aufzubauen. Dieser kann auf der Grundlage der jeweiligen aktuell übermittelten Referenznummern in Verbindung mit den mittels der Benutzer-ID für den jeweiligen Benutzer bestimmten Daten veranlassen, gewünschte Waren, Dienstleistungen und Informationen bereitzustellen.

Die Referenzmuster können auch Parameter aufweisen, die von einer Interaktionsvorrichtung als Sprachausgabe wiederzugebende Sprachsignale und/oder Daten umfassen, die unter Verwendung von in Speichereinrichtungen von Interaktionsvorrichtungen vorliegenden Sprachsignalen zur Erzeugung von Sprachausgaben dienen. Vergleichbar hierzu können auch Parameter verwendet werden, die einem Benutzer alphanumerisch und/oder graphisch zur Verfügung zu stellende Daten wiedergeben, wenn entsprechend aufgebaute Interaktionsvorrichtungen verwendet werden.

Die Verarbeitung der Parameter des Referenzmusters wird durch entsprechende Steueranweisungen bestimmt. Alternativ oder ergänzend ist es möglich, die Steuerung der Interaktionsvorrichtung auf der Grundlage von Steuerprogrammen für die Interaktionsvorrichtung vorzunehmen. Hierbei kann das Referenzmuster angeben, welches oder welche Steuerprogramme zu aktivieren sind, um die Steuerung durchzuführen.

### Interaktionsvorrichtung für Druckerzeugnisse

Zum Erfassen eines Referenzmusters wird, wie in Fig. 2 schematisch dargestellt, eine Vorrichtung 1 mit einer Sensoreinheit 2 verwendet, die ein Array aus Sensorelementen 4 (z.B. Fotodioden) aufweist. Von der Sensoreinheit 2 erfaßte, ein abgetastetes Referenzmuster 6 wiedergebende Daten werden von einer Steuereinheit 8 ausgewertet, um von dem Referenzmuster 6 bereitgestellte Informationen/Daten zu ermitteln. Hierbei werden oben genannte Steueranweisungen in dem Referenzmuster 6 als Steuercode zum Betrieb der Steuereinheit 8 verwendet, wobei Parameter des Referenzmusters 6 auf der Grundlage der Steuercodes verarbeitet und verwendet werden.

Hierbei kann die Auswertung durch die Steuereinheit 8 beim Abtasten des Referenzmusters 6 durchgeführt werden, oder von der Sensoreinheit 2 erfaßte Daten werden in einen Speicher 10 übertragen, um nachfolgend von der Steuereinheit 8 ausgewertet zu werden.

Zum Aufbau einer Telefonverbindung unter Verwendung von DTMF-Signalen weist die Interaktionsvorrichtung 1 einen Lautsprecher 12 auf, der zur akustischen Kopplung der Interaktionsvorrichtung 1 mit einem Telefon dient. Zur Erzeugung und Ausgabe von entsprechenden, zum Aufbau einer gewünschten Telefonverbindung erforderlichen DTMF-Signalen ist es möglich, daß die Steuereinheit 8 entsprechende Parameter des Referenzmusters 6 zur Erzeugung von DTMF-Signalen verwendet. Alternativ oder ergänzend können DTMF-Signale erzeugt werden, indem die Steuereinheit 8 in Abhängigkeit des jeweiligen erfaßten Referenzmusters aus in einem Speicher (nicht dargestellt) gespeicherten Daten, die zur Erzeugung von DTMF-Signalen dienen und/oder solche wiedergeben, entsprechende auswählen, um DTMF-Signale für eine durch das Referenzmuster 6 vorgegebene Telefonverbindung bzw. Telefonnummer auszugeben.

Zum Aufbau von Datenverbindungen können auch alternativ oder ergänzend Einrichtung (nicht dargestellt) zur induktiven Kopplung der Interaktionsvorrichtung 1 mit entsprechenden Schnittstellen und/oder ein optional vorgesehenes Funkmodul 14 (z.B. ein Bluetooth-Modul, ein ISM-Band-Modul) verwendet werden.

Ferner können weitere aus dem Referenzmuster ermittelte Informationen/Daten einem Benutzer der Interaktionsvorrichtung 1 optisch auf einem LCD-Display 16 oder anderen optischen Wiedergabeeinrichtungen (nicht dargestellt) und/oder über den Lautsprecher 12 bereitgestellt werden.

Um die Bedienung der Vorrichtung zur Interaktion mit einem Druckerzeugnis benutzerfreundlich zu gestalten und kleine Bauformen zu ermöglichen, wird bei der dargestellten Ausführungsform ein einzelner Taster 18 zur Steuerung und Dateneingabe durch einen Benutzer verwendet. Zur Anzeige des Betriebszustandes der Interaktionsvorrichtung 1 weist diese eine rote Leuchtdiode 20 und eine grüne Leuchtdiode 22 auf. Beispielsweise kann eine Aktivierung der grünen Leuchtdiode 22 angeben, daß die Interaktionsvorrichtung 1 betriebsbereit ist und/oder der Benutzer durch eine Betätigung des Tasters 18 diese steuern kann. Eine Aktivierung der roten Leuchtdiode 20 kann angeben, daß die Interaktionsvorrichtung 1 nicht betriebsbereit ist oder beim Betrieb derselben ein Fehler aufgetreten ist. Um die Interaktionsvorrichtung 1 wieder in einen betriebsbereiten Zustand zu bringen oder einen aufgetretenen Fehler zu beheben, kann ein Benutzer den Taster 18 betätigen. Um dem Benutzer anzuzeigen, daß die Interaktionsvorrichtung 1 ein erfaßtes Referenzmuster verarbeitet oder Daten/Signale empfängt bzw. ausgibt, ist es vorgesehen, die rote Leuchtdiode 20 und die grüne Leuchtdiode 22 wechselweise zu betreiben. Wird nach einem derartigen Betrieb der Leuchtdioden 20 und 22 die grüne Leuchtdiode 22 aktiviert, ist der vorherige Betrieb der Interaktionsvorrichtung 1 erfolgreich abgeschlossen worden, wohingegen eine folgende Aktivierung der roten Leuchdiode 20 angibt, daß ein Fehler aufgetreten ist.

Zur Erzeugung von Sprachausgaben weist die Interaktionsvorrichtung 1 optional einen Speicher 24 mit Sprachdaten und/oder ein Spracherzeugungsmodul (nicht dargestellt) auf, um in Abhängigkeit des Referenzmusters 6 Sprachausgaben über- den Lautsprecher 12 auszugeben. Die Sprachausgabe kann alternativ oder ergänzend zu den Leuchtdioden 20 und 22 verwendet werden, um den aktuellen Betriebszustand der Interaktionsvorrichtung 1 anzugeben. Neben Referenzmuster eines Druckerzeugnisses können auch akustisch bereitgestellte Referenzmuster mittels eines Mikrofons erfaßt werden. Bei der dargestellten Ausführungsform der Interaktionsvorrichtung 1 kann der Lautsprecher 12 beispielsweise durch Betätigung des Tasters 18 und/oder in Abhängigkeit eines entsprechenden Referenzmusters als Mikrofon betrieben werden. Akustische Referenzmuster können beispielsweise mittels eines Fernsehgerätes, eines Radioapparates, eines Computersystems und eines Telefons bereitgestellt werden.

Mit der Funktion und Wirkung von Referenzmustern vergleichbare Signale können mittels einer Infrarotschnittstelle 26 beispielsweise von Telefonen, Computersystemen, Set-Top-Boxen für Fernsehgeräte usw. empfangen werden. Für diesen Betrieb der Interaktionsvorrichtung 1 kann ein entsprechender Referenzmuster, der Taster 18 und/oder ein dafür vorgesehenes Bedienelement (nicht dargestellt) verwendet werden. Die Infrarotschnittstelle 26 kann auch verwendet werden, um Daten der Interaktionsvorrichtung 1 an andere Systeme zu übermitteln.

Mittels entsprechender Steueranweisungen und Parameter des Referenzmuster 6 oder eines entsprechenden Referenzmusters kann ein optionaler Timer 28 der Interaktionsvorrichtung 1 gestartet werden, wobei der Timer 28 durch eine Betätigung des Tasters 18 oder ein Erfassen eines entsprechenden Referenzmusters gestoppt werden kann.

Die Energieversorgung 30 der Interaktionsvorrichtung 1 kann durch Batterien, Akkumulatoren, Solarzellen und dergleichen und/oder über eine Verbindung mit einer externen Energiequelle erfolgen (nicht dargestellt).

Die hier als separate Vorrichtung dargestellte Interaktionsvorrichtung 1 kann auch baueinheitlich in andere Vorrichtungen integriert sein, wie z.B. mobile Rechnersysteme, Mobiltelefone, Fernbedienungen für Fernseh- und/oder Radiosysteme und dergleichen.

### Interaktionssystem für Druckerzeugnisse

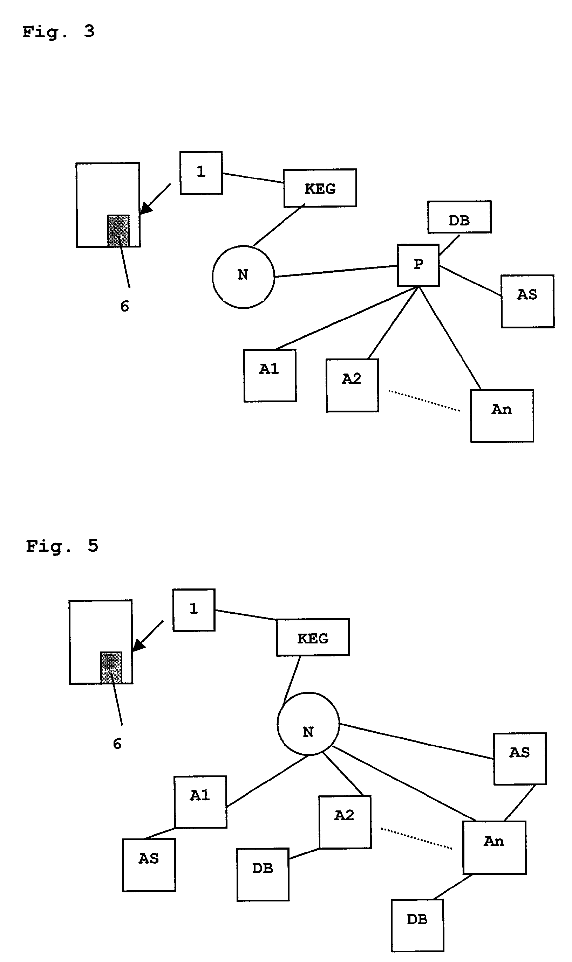

Das in Fig. 3 dargestellte System zur Verwendung in Verbindung mit interaktiven Druckerzeugnissen umfaßt die in Fig. 2 dargestellte Interaktionsvorrichtung 1, ein dem Benutzer derselben zugeordnetes Kommunikationsendgerät KEG, ein entsprechendes mit dem Kommunikationsendgerät KEG verbindbares Netzwerk und ein mit dem Netzwerk N verbindbares Rechnersystem P.

Das Rechnersystem P dient als Portal, d.h. als System, das dem Benutzer der Interaktionvorrichtung 1 einen Zugang zu weiteren, wie im folgenden exemplarisch beschrieben, Rechnersysteme ermöglicht. Das Portal P empfängt von der Interaktionsvorrichtung 1 über das Kommunikationsendgerät KEG und das Netzwerk N übermittelte Daten und verarbeitet diese. Dem Portal P ist eine Datenbasis DB baueinheitlich integriert oder separat ausgeführt zugeordnet. Die Datenbasis DB umfaßt Daten, die Zuordnungen von von dem Portal P erhaltenen Benutzer-IDs zu entsprechenden personenbezogenen Daten, wie z.B. Namen, Adressen, Bankverbindungen und dergleichen, ermöglichen.

Ferner weist das System Rechnersysteme A1, ..., An auf, zu denen das Portal P Datenverbindungen aufbauen kann. Zum Aufbau solcher Datenverbindungen können Computernetzwerke, wie z.B. das Internet, Telefonnetzwerke, Standleitungen usw. verwendet werden. Die Rechnersysteme A1, ..., An sind jeweils Parteien zugeordnet, die im Zusammenhang mit der Nutzung eines interaktiven Druckerzeugnisses von Benutzern kontaktiert werden können. Beispiele hierfür sind Anbieter von Waren, Dienstleistungen, Informationen und dergleichen, die beispielsweise ihre Angebote in Verbindung mit entsprechenden Referenzmuster in einer Zeitung oder Zeitschrift inserieren.

Außerdem ist es vorgesehen, daß das System zur Verwendung mit interaktiven Druckerzeugnissen eine im folgenden als Abrechnungssystem AS bezeichnete Komponente umfaßt. Das Abrechnungssystem AS, beispielsweise ein Rechnersystem eines Kreditkartenunternehmens, einer Bank, eines Inkassobüros und dergleichen, kann Kosten für Benutzer abrechnen, die bei einer Verwendung/Nutzung von interaktiven Druckerzeugnissen entstehen. Im Fall von Gewinnspielen und dergleichen, die mittels eines interaktiven Druckerzeugnisses angeboten werden, kann das Abrechnungssystem AS auch verwendet werden, um teilnehmenden Benutzern des interaktiven Druckerzeugnisses Gewinne, z.B. in Form von geldwerten Leistungen oder Sachpreisen, zukommen zu lassen.

Die Funktionen des Abrechnungssystems AS können alternativ oder optional auch von dem Portal P und einzelnen oder mehreren der Rechnersysteme A1, ..., An bereitgestellt werden. Ein Vorteil der Verwendung des Abrechnungssystems AS besteht darin, daß den einzelnen Rechnersystemen A1, ..., An für Abrechnungszwecke erforderliche personenbezogene Daten nicht bereitgestellt werden müssen. Dies erhöht die Datensicherheit in dem System, da derartige personenbezogene Daten lediglich dem Abrechnungssystem AS übermittelt werden. Ferner werden die Betreiber der Rechnersysteme A1, ..., An von im Zusammenhang mit Abrechnungen entstehenden Aufgaben entlastet. Ob und in welchem Ausmaß das Abrechnungssystem AS bei einer interaktiven Nutzung eines Drukkerzeugnisses genutzt wird, hängt unter anderem von den jeweiligen angebotenen interaktiven Nutzungsmöglichkeiten eines Druckerzeugnisses, den in dem System zu erfüllenden Sicherheitsanforderungen, dem Aufbau und der Struktur der einzelnen Rechnersysteme A1, ..., An, sowie des Portals P und dergleichen ab.

Wie in Fig. 3 dargestellt, sind Datenverbindungen zwischen den Rechnersystemen A1, ..., An und dem Netzwerk N und/oder dem Abrechnungssystem AS vorgesehen. Diese Datenverbindungen stellen optionale ergänzende oder alternative Datenverbindungen dar, da Datenverbindungen zu dem Netzwerk N und/oder dem Abrechnungssystem AS auch über das Portal P aufgebaut werden können.

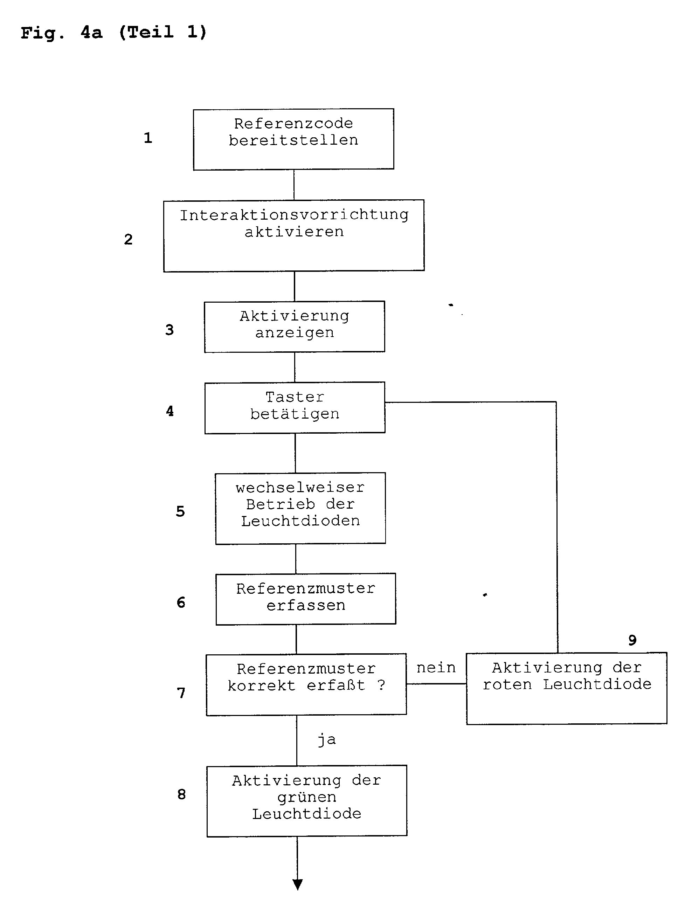

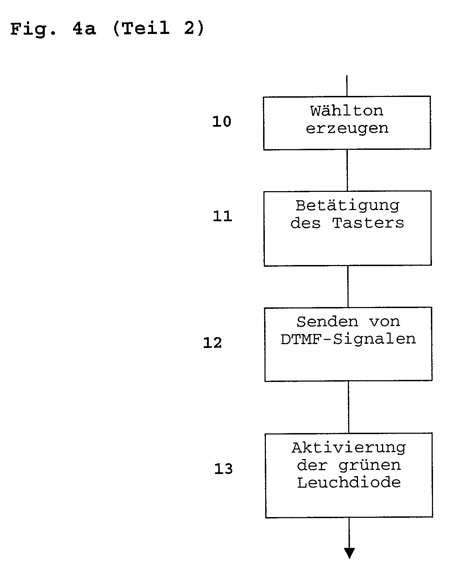

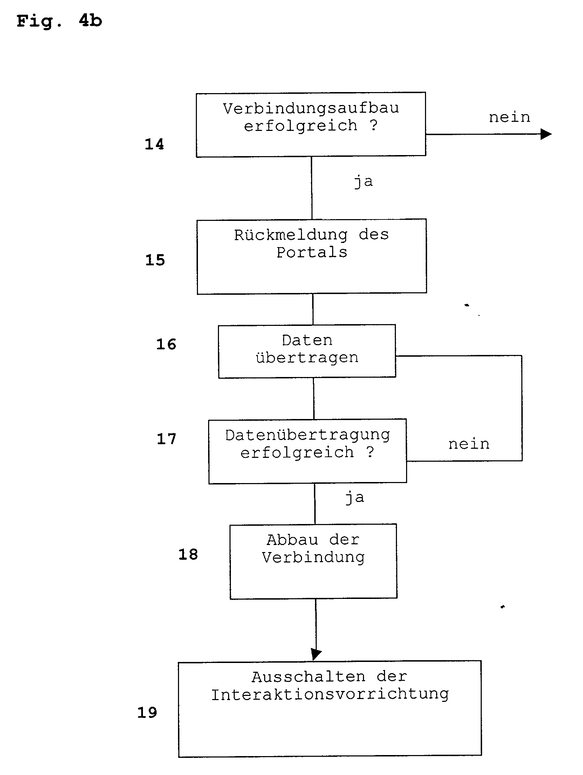

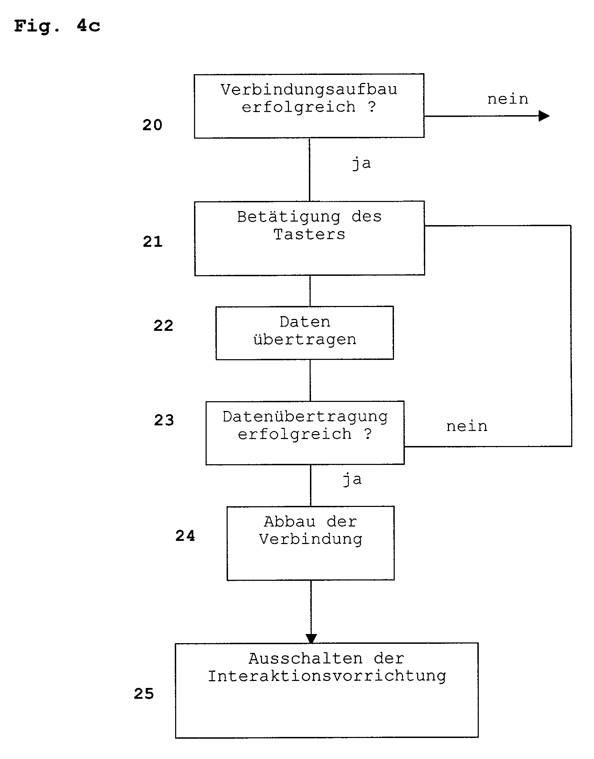

Im folgenden werden unter Bezugnahme auf die Flußdiagramme von Fig. 4 mögliche Betriebsmodi des in Fig. 3 dargestellten Systems am Beispiel einer interaktiv nutzbaren Zeitung beschrieben, die Inserate für Waren und Dienstleistungen mit entsprechenden Referenzmuster enthält.

Um die interaktiven Möglichkeiten einer Zeitung Z zu nutzen, bewirbt beispielsweise ein Anbieter einer Ware diese mit einem Zeitungsinserat ZI, dem ein Referenzmuster 6 zugeordnet ist (Schritt 1). Möchte ein Leser der Zeitung Z die beworbene Ware erwerben oder nähere Informationen über diese erhalten, erfaßt er mit seiner Interaktionsvorrichtung 1 das dem Inserat ZI zugeordnete Referenzmuster 6 (Schritte 2 bis 8).

Um die Interaktionvorrichtung 1 in Betrieb zu nehmen, betätigt der Benutzer den Taster 18 (Schritt 2), wobei eine folgende Aktivierung der grünen Leuchtdiode 22 eine erfolgreiche Inbetriebnahme der Interaktionsvorrichtung 1 anzeigt. Dem gegenüber erkennt der Benutzer an einer Aktivierung der roten Leuchtdiode 20, daß die Interaktionsvorrichtung 1 nicht betriebsbereit ist. Wird keine der Leuchtdioden 20 und 22 aktiviert, ist davon auszugehen, daß die Interaktionsvorrichtung 1 defekt oder deren Energieversorgung 30 unzureichend ist.

Um die Interaktionsvorrichtung 1 zum Erfassen des Referenzmusters 6 zu betreiben, betätigt der Benutzer den Taster 18 (Schritt 4), wobei ein wechselweiser Betrieb der Leuchtdioden 20 und 22 anzeigt, daß die Interaktionsvorrichtung 1 zum Erfassen des Referenzmusters 6 bereit ist (Schritt 5). In diesem Betriebszustand erfaßt der Benutzer durch eine geeignete Handhabung (z.B. Bewegung, Positionierung) der Interaktionsvorrichtung 1 das Referenzmuster 6 (Schritt 6). In Schritt 7 wird überprüft, ob das Referenzmuster 6 korrekt erfaßt wurde, was durch eine Aktivierung der grünen Leuchtdioden 22 angezeigt wird (Schritt 8). Ist in Schritt 7 festgestellt worden, daß das Referenzmuster 6 nicht korrekt erfaßt wurde, wird dies durch eine Aktivierung der roten Leuchtdiode 20 angezeigt (Schritt 9).

Wie oben ausgeführt, weist das Referenzmuster 6 eine Referenznummer auf, die für die beworbene Ware und/oder das Zeitungsinserat spezifisch ist. Ferner gibt die Referenznummer an, ob der Leser die beworbene Ware erwerben und/oder weitere Informationen darüber erhalten möchte. Für diese Auswahl ist es möglich, dem Zeitungsinserat ZI zwei Referenzmuster zuzuordnen, von denen eines zur Bestellung der Ware selbst und das andere zum Anfordern weiterer Informationen über diese dient. Hierbei kann, je nach Ausführung der Referenzmuster, der Leser diese nacheinander erfassen und verwenden oder nacheinander erfassen und gemeinsam verwenden.

Diese Auswahl durch den Leser kann auch erfolgen, indem dem Zeitungsinserat ZI ein Referenzmuster zugeordnet wird, das die Interaktionsvorrichtung 1 so betreibt, daß der Leser, d.h. der Benutzer der Interaktionsvorrichtung 1, durch eine Bedienung auswählen kann, ob er die beworbene Ware erwerben und/oder weitere Informationen über diese erhalten möchte. Hierbei ist es möglich, daß die Interaktionsvorrichtung 1 entsprechende Sprachausgaben erzeugt, ("Möchten Sie die Ware erwerben?"; "Möchten Sie weitere Informationen erhalten?"), die der Leser durch eine Betätigung des oben beschriebenen Tasters der Interaktionsvorrichtung 1 beantworten kann. Bei einer Erzeugung einer solchen Sprachausgabe wird der Timer der Interaktionsvorrichtung 1 gestartet, wobei eine Betätigung des Tasters innerhalb einer vorgegebenen Zeitdauer, die dem Leser beispielsweise durch eine an der Interaktionsvorrichtung 1 angebrachte Leuchtdiode angegeben wird, als Bestätigung interpretiert wird. Erfolgt die Betätigung des Tasters nicht oder erst nach Ablauf der vorbestimmten Zeitdauer, wird dies automatisch als Ablehnung ausgelegt.

Wie oben beschrieben, kann das Referenzmuster 6 auch einen Feedback-Code umfassen, um anzugeben, auf welche Weise der Leser der Zeitung die Ware zugestellt und/oder bezahlen möchte, bzw. auf welche Weise gewünschte weitere Informationen über die beworbene Ware bereitgestellt werden sollen. Hierbei kann die Auswahl wie zuvor beschrieben erfolgen.

Im folgenden, wird der Einfachheit halber angenommen, daß es das Referenzmuster 6 dem Leser ermöglicht, zu bestimmen, ob er die Ware erwerben und/oder weitere Informationen darüber erhalten möchte. Hat sich der Leser dafür entschieden, daß er sowohl die Ware erwerben als auch weitere Informationen darüber erhalten möchte, wird aus dem Referenzmuster 6 eine entsprechende Referenznummer ausgewählt oder durch die Interaktionsvorrichtung 1 erzeugt.

Diese Referenznummer wird zusammen mit der in der Interaktionsvorrichtung 1 gespeicherten Benutzer-ID, wie oben beschrieben, über das Kommunikationsendgerät KEG, in diesem Fall ein Telefon, und das Netz N an das Portal P übertragen. Bei dem in Fig. 3 dargestellten System werden von der Interaktionsvorrichtung 1 zu übermittelnde Daten zu einem Adressaten, nämlich dem Portal P übertragen. Daher ist es hier möglich, daß die zum Aufbau einer Verbindung zu dem Portal P erforderliche Telefonnummer in Form von DTMF-Signalen oder Daten zur Erzeugung von DTMF-Signalen in der Interaktionsvorrichtung 1 gespeichert ist und zum Aufbau der gewünschten Datenübertragungsverbindung zu dem Portal P automatisch von der Interaktionsvorrichtung 1 verwendet wird. Wie oben beschrieben, kann die Telefonnummer auch in Abhängigkeit des Referenzmusters erzeugt oder von diesem bereitgestellt werden.

Hierfür hebt der Benutzer, i.e. der Leser, der Interaktionsvorrichtung 1 den Telefonhörer des Telefons ab, um einen Wählton zu erhalten (Schritt 10). Durch eine Betätigung des Tasters 18 (Schritt 11) erzeugt die Interaktionsvorrichtung die der Telefonnummer entsprechenden DTMF-Signale und gibt diese über den Lautsprecher 12 aus, was durch einen wechselweisen Betrieb der Leuchtdioden 20 und 22 angezeigt wird (Schritt 12). Nach einer erfolgreichen Beendigung der Übertragung der DTMF-Signale wird die grüne Leuchtdiode 22 aktiviert (Schritt 13).

Im folgenden werden unter Bezugnahme auf Fig. 4b und 4c unterschiedliche Betriebsarten der Interaktionsvorrichtung 1 und des in Fig. 3 dargestellten Systems beschrieben, die für das in Fig. 5 dargestellte System entsprechend gelten.

Bei dem durch das Flußdiagramm von Fig. 4b dargestellten Betrieb kommunizieren der Interaktionsvorrichtung 1 und das Portal P miteinander, d.h. tauschen Daten aus, die unter anderem den Betrieb der Interaktionsvorrichtung 1 steuern und Aussagen über die Verbindung der Interaktionsvorrichtung 1 mit dem Portal P ermöglichen. Dem gegenüber wird der Betrieb der Interaktionsvorrichtung 1 gemäß Fig. 4c auch durch den Benutzer gesteuert.

Nach der Übertragung der DTMF-Signale (nach Schritt 13 von Fig. 4a) wird in Schritt 14 überprüft, ob der Verbindungsaufbau zu dem Portal P erfolgreich abgeschlossen wurde. Wird in Schritt 14 festgestellt, daß keine Verbindung zwischen Interaktionsvorrichtung 1 und dem Portal P aufgebaut wurde, erhält die Interaktionsvorrichtung keine Rückmeldung des Portales P. Für einen erneuten Versuch, eine Verbindung zwischen der Interaktionsvorrichtung 1 und dem Portal P aufzubauen, werden die Schritte 12, 13 und 14 beispielsweise nach einer vorgegebenen Zeitdauer, während der keine Rückmeldung von dem Portal P erhalten wurde, wiederholt.

Bei einer aufgebauten Verbindung zwischen der Interaktionsvorrichtung 1 und dem Portal P sendet das Portal P eine Rückmeldung an die Interaktionsvorrichtung 1 (Schritt 15), die in Antwort darauf in Schritt 16 Daten übermittelt, die angeben, daß der Benutzer, wie oben angenommen, sowohl die Ware erwerben als auch weitere Informationen darüber erhalten möchte. Nach der durch einen wechselweisen Betrieb der Leuchtdioden 20 und 22 angezeigten Übertragung dieser Daten sendet das Portal P eine Rückmeldung an die Interaktionsvorrichtung 1 (Schritt 17). Gibt diese Rückmeldung des Portales P an, daß die Datenübertragung fehlgeschlagen ist, geht die Steuerung der Interaktionsvorrichtung 1 zu Schritt 16 zurück, um die Daten erneut zu übertragen. Hierbei ist es vorgesehen, die Wiederholung der Datenübertragung für eine vorbestimmte Anzahl und/oder für eine vorbestimmte Zeitdauer zu wiederholen. Können die Daten nicht erfolgreich zu dem Portal P übertragen werden, wird dies durch eine Aktivierung der roten Leuchtdiode 20 angezeigt.

Gibt die Rückmeldung des Portals P gemäß Schritt 17 an, daß die Daten erfolgreich übertragen wurden, kann die Verbindung zwischen der Interaktionsvorrichtung und dem Portal P abgebaut werden (Schritt 18). Der Verbindungsabbau kann durch das Portal P eingeleitet werden oder indem der Benutzer aufgrund einer die erfolgreiche Datenübertragung angebenden Aktivierung der grünen Leuchtdiode 22 die Verbindung beendet, d.h. den Telefonhörer auflegt. Danach kann durch eine Betätigung des Tasters 18 die Interaktionsvorrichtung 1 ausgeschaltet werden (Schritt 19), wobei des vorgesehen ist, daß sich die Interaktionsvorrichtung 1 nach einer vorbestimmten Zeitdauer selbständig ausschaltet, wenn der Schritt 19 nicht durchgeführt wird.

Bei dem Betrieb der Interaktionsvorrichtung 1 gemäß Fig. 4c wird in Schritt 20 von dem Benutzer überprüft, ob die Verbindung zwischen der Interaktionsvorrichtung 1 und dem Portal P aufgebaut ist. Wird in Schritt 20 festgestellt, daß keine Verbindung zwischen der Interaktionsvorrichtung 1 und dem Portal P aufgebaut ist, d.h. der Benutzer keine positive Rückmeldung des Portales P über den Telefonhörer erhält, werden die Schritte 11, 12, 13 und 20 solange wiederholt, bis eine Verbindung aufgebaut wurde, eine vorbestimmte Zeitdauer und/oder eine vorbestimmte Anzahl von Versuchen zum Aufbau von Verbindungen überschritten wurde, oder der Benutzer keine weiteren Versuche durchführt. Um eine Unterscheidung der Betätigungen des Tasters 18 in den Schritten 11 und 21 zu ermöglichen, ist es beispielsweise möglich, daß in Schritt 11 eine Betätigung des Tasters 18 für eine vorbestimmte Zeitdauer erforderlich ist, während in Schritt 21 lediglich eine einmalige, kurze Betätigung des Tasters 18 ausreicht.

Ein erfolgreicher Verbindungsaufbau kann dem Benutzer beispielsweise angegeben werden, indem entsprechende, von dem Portal übermittelte Sprachinformationen oder Tonfolgen mittels des Telefonhörers ausgegeben werden. In Antwort darauf betätigt der Benutzer in Schritt 21 den Taster, um die Interaktionsvorrichtung 1 zum Senden der Daten zu betreiben, die angeben, daß der Benutzer sowohl die Ware erwerben als auch weitere Informationen darüber erhalten möchte. Wie oben beschrieben, wird diese Datenübertragung durch einen wechselweisen Betrieb der Leuchtdioden 20 und 22 angezeigt (Schritt 22).

Danach erhält der Benutzer über den Telefonhörer eine Rückmeldung des Portales P, z.B. in Form von Sprachausgaben oder Tonfolgen (Schritt 23). Gibt die Rückmeldung des Portales P an, daß die Datenübertragung fehlgeschlagen ist, werden die Schritte 21, 22 und 23 solange wiederholt, bis die Datenübertragung erfolgreich abgeschlossen wurde oder der Benutzer den Versuch abbricht. Hierbei ist es vorgesehen, daß die Anzahl der Versuche Daten zu dem Portal P zu übertragen und/oder die Dauer, während der wiederholte Versuche für Datenübertragungen durchgeführt werden können, begrenzt ist.

Gibt die Rückmeldung des Portales P gemäß Schritt 23 an, daß die Datenübertragung erfolgreich abgeschlossen wurde, kann der Benutzer die Interaktionsvorrichtung 1 durch eine Betätigung des Tasters 18 ausschalten (Schritt 24). Hierbei ist es möglich, daß zum Ausschalten der Interaktionsvorrichtung 1 der Taster 28 für eine vorbestimmte Zeitdauer betätigt werden muß, um die Betätigung des Tasters 18 zum Ausschalten von der Betätigung des Tasters in Schritt 21 zu unterscheiden.

Nach Erhalt der von der Interaktionsvorrichtung 1 übermittelten Daten ermittelt das Portal P unter Verwendung der Datenbasis DB auf der Grundlage der empfangenen Benutzer-ID für den Leser der Zeitung Z spezifische personenbezogene Daten (z.B. Name, Adresse, Bankverbindung usw.). Für eine Überprüfung der Authentizität des Lesers kann das Portal P, z.B. mittels einer automatisierten Sprachausgabe, den Leser auffordern, eine PIN- und/oder TAN-Nummer einzugeben.

Anhand der empfangenen Referenznummer ermittelt das Portal P, welches der Rechnersysteme A1, ..., An dem Anbieter der in dem Zeitungsinserat ZI beworbenen Ware zugeordnet ist. Ist das diesem Anbieter zugeordnete Rechnersystem das Rechnersystem A1, baut das Portal P eine Datenübertragungsverbindung zu diesem auf, um Daten zu übertragen, die dem Anbieter angeben, daß der Leser der Zeitung Z die Ware erwerben und weitere Informationen erhalten möchte. Ferner überträgt das Portal P Daten an das Rechnersystem A1, die angeben, auf welche Weise der Leser die Ware erhalten und bezahlen möchte sowie auf welche Weise die weiteren Informationen über die Ware bereitgestellt werden sollen.

Möchte der Leser der Zeitung Z beispielsweise die Ware mittels einer Kreditkarte bezahlen, teilt dies das Portal P dem Rechnersystem A1 und dem Abrechnungssystem AS mit. Die Abrechnung über die Kreditkarte des Lesers wird von dem Abrechnungssystem AS vorgenommen, wobei die Mitteilung über den gewünschten Bezahlmodus an das Rechnersystem A1 angibt, daß der Anbieter der beworbenen Ware keine Maßnahmen zum Bezahlen derselben ergreifen muß. Zur Bestätigung, daß der Leser die Ware bezahlen kann und/oder die Bezahlung erfolgt ist, kann das Abrechnungssystem AS über das Portal P entsprechende Informationen an das Rechnersystem A1 oder über eine unmittelbar zu diesem aufgebaute Datenübertragungsverbindung übermitteln.

In Antwort auf die von dem Portal P erhaltenen Daten veranlaßt das Rechnersystem A1 und/oder der Anbieter der Ware, daß die gewünschte Ware, beispielsweise auf dem Postweg, dem Leser der Zeitung Z zugestellt wird. Die von dem Leser gewünschten weiteren Informationen können beispielsweise per E-Mail, SMS-Nachricht, schriftlich auf dem Postweg und dergleichen bereitgestellt werden. Wünscht der Leser eine telefonische Rücksprache mit dem Anbieter der beworbenen Ware, kann diese über die mit dem Portal P aufgebaute Telefonverbindung oder durch eine von dem Rechnersystem A1 aufgebaute Telefonverbindung erfolgen.

Das in Fig. 5 dargestellte System unterscheidet sich von dem in Fig. 3 gezeigten System darin, daß hier Datenübertragungen von der Interaktionsvorrichtung 1 nicht über ein als zentraler Verteiler dienendes Portal, sondern unmittelbar zu den Rechnersystemen A1, ..., An erfolgen kann. Um die einzelnen Rechnersysteme A1, ..., An zu kontaktieren, ist es hierbei erforderlich, unterschiedliche DTMF-Rufnummern zu verwenden, die in der Interaktionsvorrichtung 1 eingespeichert sind und durch dessen Benutzer ausgewählt werden und/oder durch das Rechnersystemen A1, ..., An zugeordnete Referenzmuster bereitgestellt werden.

Zur Ermittlung personenbezogener Daten kann, wie oben beschrieben, eine gemeinsame Datenbasis verwendet werden, auf die die Rechnersysteme A1, ..., An zugreifen können. Ferner ist es vorgesehen, daß eine oder mehrere Datenbasen verwendet werden, die einzelnen oder mehreren der Rechnersysteme A1, ..., An zugeordnet sind. In vergleichbarer Weise ist es möglich, ein zentrales Abrechnungssystem und/oder einzelne oder mehrere Abrechnungssysteme zu verwenden.

### Anwendungsbeispiele

Im folgenden werden Anwendungsbeispiele für technische Interaktionen mit Druckerzeugnissen dargestellt, die am Beispiel einer Zeitung erläutert werden.

Konsumenten soll eine Möglichkeit eröffnet werden, mit der sie auf unterschiedliche Medienangebote in einer Zeitung, wie z.B. Anzeigen/Inserate für Waren und Dienstleistungen, Rätsel, Quizfragen, Kaufangebote und dergleichen, reagieren können. Zur Reaktion der Konsumenten auf Medienangebote sind diese mittels der oben beschriebenen Referenzmuster so referenziert, daß die Konsumenten die Möglichkeit einer Interaktion erkennen können.

Wie oben beschrieben, wird ein Referenzmuster, das einem einen Konsumenten interessierenden Medienangebot zugeordnet ist, erfaßt und ausgewertet.

Die hierfür verwendbare Interaktionsvorrichtung weist zur einfachen Bedienung eine Einknopfbedienung mit zeitlicher Ablehnungsfunktion auf, wobei eine Betätigung eines Tasters als Bestätigung ("Ja") interpretiert wird, wenn die Betätigung innerhalb einer vorbestimmten Zeitdauer erfolgt. Erfolgt eine solche Betätigung nicht oder erst nach der vorbestimmten Zeitdauer, wird dies automatisch als Ablehnung ("Nein") ausgelegt.

### Reaktion auf ein Waren- oder Dienstleistungsinserat in einer Zeitung

Für eine interaktive Nutzung einer Zeitung hinsichtlich eines Inserates, das eine Ware oder eine Dienstleistung bewirbt, wird dem Inserat ein entsprechendes Referenzmuster zugeordnet, d.h. in der Zeitung dem Inserat räumlich zugeordnet abgedruckt.

Ein Leser der Zeitung, der an der angebotenen Ware oder Dienstleistung interessiert ist, beispielsweise weitere Informationen erhalten möchte oder die Ware erwerben bzw. die Dienstleistung in Anspruch nehmen möchte, erfaßt mittels der Interaktionsvorrichtung das entsprechende Referenzmuster, indem er mit der Interaktionsvorrichtung diesen abtastet.

In Abhängigkeit von dem Referenzmuster wird dann die Interaktionsvorrichtung betrieben. Enthält beispielsweise das Referenzmuster detailliertere Angaben zu der Ware bzw. der Dienstleistung wiedergeben sowie geeignete Steueranweisungen für die Interaktionsvorrichtung, können diese waren- bzw. dienstleistungsbezogenen weiteren Angaben unmittelbar dem Benutzer graphisch und/oder akustisch bereitgestellt werden. Diese Angaben können auch Informationen über einen lokalen, für den betreffenden Leser der Zeitung zuständigen Anbieter der Ware bzw. Dienstleistungen enthalten. Um den für den Leser zuständigen Anbieter der Ware bzw. Dienstleistung zu identifizieren und beispielsweise dessen Adresse und Telefonnummer bereitzustellen, können die in der Interaktionsvorrichtung gespeicherten den Benutzer, den Leser, kennzeichnenden Daten verwendet werden.

Wie oben unter Bezugnahme auf Fig. 3 und 5 beschrieben, kann der Anbieter der Ware oder Dienstleistung unter Verwendung einer von dem erfaßten Referenzmuster bereitgestellten oder in der Interaktionsvorrichtung gespeicherten DTMF-Rufnummer kontaktiert werden, um die gewünschte Ware oder Dienstleistung zu erwerben bzw. in Anspruch zu nehmen.

Ist die Interaktionsvorrichtung mit einem Funkmodul zum Aufbau einer Verbindung zu einem mobilen Telefonnetz, einer Schnittstelle zur Verbindung mit einem Computernetzwerk (z.B. Internet) und/oder mit einem sonstigen Kommunikationssystem ausgestattet, ergeben sich weitere interaktive Nutzungsmöglichkeiten der Zeitung. So kann das Referenzmuster Steueranweisungen und Parameter aufweisen, auf deren Grundlage die Interaktionsvorrichtung als mobiles Telefon und/oder in Verbindung mit einem Computernetzwerk bzw. einem sonstigen Datenkommunikationsnetzwerk betrieben werden kann. Auf diese Weise ist es beispielsweise möglich, einen Anbieter der Ware bzw. Dienstleistung auf einfache Weise zu kontaktieren, um weitere Angaben über die Ware bzw. die Dienstleistung anzufordern, eine telefonische Kontaktaufnahme mit dem Anbieter zu vereinbaren, einzuleiten oder durchzuführen, sowie elektronische Nachrichten (z.B. E-Mail) und telefonisch übertragene Textnachrichten (z.B. SMS-Nachrichten) zu übertragen. Vorteilhafterweise wird ein derartiger Betrieb der Interaktionsvorrichtung durch deren Benutzer, beispielsweise durch Betätigen des oben genannten Tasters 18 initiiert. Diese Verwendung der Interaktionsvorrichtung gestaltet sich für deren Benutzer besonders komfortabel, wenn die Interaktionsvorrichtung mit einem Funktionen eines mobilen Telefons bereitstellenden und/oder gemäß dem Bluetooth-Standard arbeitenden Funkmodul ausgestattet ist. In diesem Fall ist es lediglich erforderlich, daß der Benutzer eine Kontaktaufnahme mit dem Anbieter der Ware bzw. Dienstleistung freigibt, worauf die Interaktionsvorrichtung automatisch in einer geeigneten Weise betrieben wird. Um eine Datenübertragung über ein Computernetzwerk oder ein anderes Datenkommunikationsnetzwerk (z.B. Telefonnetz) durchzuführen, verbindet der Benutzer die Interaktionsvorrichtung mit einem entsprechenden Endgerät, um Daten von der Interaktionsvorrichtung an den Anbieter der Ware bzw. Dienstleistung zu übermitteln.

### Interaktive Nutzung von Preisausschreiben, Rätselspielen, Quizfragen und dergleichen in Zeitungen

Zur interaktiven Nutzung von in einer Zeitung angebotenen Preisausschreiben, Rätselspielen, Quizfragen und dergleichen werden einem derartigen Angebot einer Zeitung ein oder mehrere Referenzmuster zugeordnet. Im folgenden wird die interaktive Nutzung eines solchen Medienangebotes am Beispiel eines sich über mehrere Tage erstreckenden Quizspieles erläutert.

Bietet eine Zeitung ihren Lesern ein mehrtägiges Quizspiel an, so werden an den betreffenden Tagen, an denen in der Zeitung Teile des Quizspieles erscheinen, dem jeweiligen das Quizspiel betreffenden Teil der Zeitung Referenzmuster zugeordnet. Sind bei dem Quizspiel zu beantwortende Fragen und mögliche Antworten auf herkömmliche Weise in der Zeitung abgedruckt, wird den möglichen Antworten jeweils ein Referenzmuster zugeordnet. Zur Teilnahme an dem Quizspiel hat ein Leser die Fragen zu beantworten, indem er sich für eine der möglichen vorgegebenen Antworten entscheidet und mittels der Interaktionsvorrichtung ein entsprechendes Referenzmuster erfaßt, das der seiner Meinung nach richtigen Antwort zugeordnet ist. In diesem Fall charakterisieren die Referenzmuster die jeweiligen Antworten und Steueranweisungen für die Interaktionsvorrichtung, die diese zum Speichern der die ausgewählten Antworten kennzeichnenden Parameter betreiben.

Nach der Beendigung des Quizspieles, d.h. der Beantwortung aller Fragen, sind in der Interaktionsvorrichtung Daten gespeichert, die angeben, für welche Antworten sich der Leser entschieden hat. Um festzustellen, wie viele Fragen der Leser korrekt beantwortet hat, kann ein dem letzten Teil des Quizspieles zugeordnetes Referenzmuster verwendet werden, der zur Auswertung der in der Interaktionsvorrichtung gespeicherten Daten zu erfassen ist. Anstelle einer Verwendung eines solchen separaten Referenzmusters ist es auch vorgesehen, die zur Bewertung der von dem Leser ausgewählten Antworten erforderlichen Informationen/Daten durch die Referenzmuster bereitzustellen, die den möglichen Antworten der letzten Frage des Quizspieles zugeordnet sind. Das Ergebnis seiner Teilnahme an dem Quizspiel sowie Angaben darüber, welche Antworten korrekt gewesen wären, können dem Leser, d.h. dem Benutzer der Interaktionsvorrichtung, optisch und/oder akustisch bereitgestellt werden.

Ferner ist es möglich, daß nach Abschluß des Quizspieles die in der Interaktionsvorrichtung gespeicherten, die von dem Leser ausgewählten Antworten wiedergebenden Daten zu einem Veranstalter des Quizspieles übertragen werden. Eine solche Übertragung kann, wie oben beschrieben, unmittelbar durch die Interaktionsvorrichtung und/oder über Computer- und Telefonnetzwerke erfolgen.

Eine weitere Bewertungsmöglichkeit der unterschiedlichen Teilnehmer an dem Quizspiel wird möglich, wenn neben der Auswahl von Antworten die Zeitdauer gespeichert wird, die der Leser jeweils zum Beantworten einer Frage benötigt.

Anstelle die Teile des Quizspieles auf herkömmliche Weise in der Zeitung abzudrucken, ist es ferner vorgesehen, lediglich die Fragen zusammen mit entsprechenden Referenzmustern bereitzustellen. In diesem Fall umfassen die Referenzmuster Steueranweisungen und Parameter, um mittels der Interaktionsvorrichtung mögliche Antworten akustisch und/oder optisch dem Leser bereitzustellen.

Ebenso ist es möglich, weder die Fragen noch mögliche Antworten auf herkömmliche Weise in einer Zeitung abzudrucken, sondern statt dessen in dem das Quizspiel betreffenden Teil der Zeitung die Leser auf das Quizspiel aufmerksam zu machen und dort Referenzmuster zu verwenden, die Fragen und mögliche Antworten des Quizspieles wiedergeben.

### Interaktive Nutzung eines Kataloges

Zur interaktiven Nutzung eines Kataloges werden den in dem Katalog angebotenen Waren Referenzmuster zugeordnet, die die Waren und eventuell unterschiedliche Ausführungen derselben (z. B. Farbe, Größe, Material, etc.) wiedergeben. Möchte ein Konsument eine oder mehrere Waren erwerben, erfaßt er mit der Interaktionsvorrichtung die den gewünschten Waren zugeordneten Referenzmuster. Kann der Konsument zwischen unterschiedlichen Ausführungen einer Ware wählen, ist es möglich, für die unterschiedlichen Ausführungsformen jeweils ein eigenes Referenzmuster oder für das Produkt ein gemeinsames Referenzmuster zu verwenden, das die Interaktionsvorrichtung zur Auswahl der gewünschten Ausführung steuert. Im letzteren Fall können Angaben über die unterschiedlichen Ausführungen eines Produktes mittels der Interaktionsvorrichtung dem Konsumenten optisch und/oder akustisch bereitgestellt werden, der durch eine und/oder mehrere Betätigungen des Tasters eine Auswahl vornimmt. Um gewünschte Ware zu bestellen, werden von der Interaktionsvorrichtung, wie oben beschrieben, über Telefonnetze, Computernetze und dergleichen die gewünschten Waren kennzeichnende Daten sowie den Benutzer kennzeichnende Daten an das entsprechende Unternehmen (Hersteller, Vertriebsniederlassung, Versandhandel usw.) übermittelt.

Zur weiteren Vereinfachung bei einer Bestellung von Produkten aus einem Katalog können Referenzmuster verwendet werden, die dem Konsumenten zur Auswahl der Art der Zustellung der gewünschten Produkte sowie deren Finanzierung bereitgestellt werden. Ferner ist es vorgesehen, Referenzmuster zu verwenden, die von dem Konsumenten ausgewählt werden und als benutzerspezifische Daten für alle aus dem Katalog ausgewählten Produkte gültig sein sollen. So können beispielsweise unter Verwendung entsprechender Referenzmuster in einem Katalog, der Bekleidung anbietet, Bekleidungsgrößen für den Konsumenten ausgewählt und für alle aus dem Katalog bestellten Bekleidungsstücke vorgegeben werden. Solche konsumentenspezifische produktübergreifende Daten können, vergleichbar zu den den Benutzer kennzeichnenden Daten, in der Interaktionsvorrichtung gespeichert und bei einer Bestellung von Produkten aus einem Katalog verwendet werden. Dies bietet sich beispielsweise an, wenn ein Konsument regelmäßig aus einem oder mehreren Katalogen Produkte bestellt.

## Patentansprüche

1. Verfahren zur Interaktion mit einem Druckerzeugnis, mit folgenden Schritten:
- Erfassen eines auf einem Druckerzeugnis (Z) angeordneten Referenzmusters (6) mit einer Sensoreinheit (2) einer Interaktionsvorrichtung (1) zur Interaktion mit dem Druckerzeugnis (Z) ,
- Ermitteln von durch das Referenzmuster (6) bereitgestellten Steueranweisungen und Parameter durch eine mit der Sensoreinheit (2) verbundene Steuereinheit (8) der Interaktionsvorrichtung (1), und
- Verarbeiten der Parameter in Abhängigkeit der Steueranweisungen durch die Steuereinheit (8), um die Interaktionsvorrichtung (1) zu steuern.

2. Verfahren gemäß Anspruch 1, mit folgenden Schritten:
- Auswählen eines Steuerprogrammes für die Interaktionsvorrichtung (1) in Abhängigkeit des Referenzmusters (6) durch die Steuereinheit (8), und
- Ausführen des ausgewählten Steuerprogrammes, um die Interaktionsvorrichtung (1) zu steuern.

3. Verfahren gemäß Anspruch 1 oder 2, mit folgendem Schritt:
- Aufbauen einer Datenübertragungsverbindung mit einem Datenverarbeitungssystem (P, A1, ..., An, AS) in Abhängigkeit des Referenzmusters (6) über eine Schnittstelleneinheit (12, 14, 16, 22) der Interaktionsvorrichtung (1).

4. Verfahren gemäß Anspruch 3, mit folgendem Schritt:
- Bereitstellen von Daten dem Datenverarbeitungssystem in Abhängigkeit des Referenzmusters (6) über die Schnittstelleneinheit (12, 14, 16, 22).

5. Verfahren gemäß einem der Ansprüche 1 bis 4, mit folgenden Schritten:
- Optisches und/oder akustisches Bereitstellen von Daten einem Benutzer des Druckerzeugnisses (Z) in Abhängigkeit des Referenzmusters (6).

6. Verfahren gemäß einem der Ansprüche 1 bis 5, mit folgendem Schritt:
- Optisches Erfassen des Referenzmusters (6).

7. Verfahren gemäß einem der Ansprüche 1 bis 6, mit folgenden Schritten:
- Erfassen von Eingaben eines Benutzers des Druckerzeugnisses (Z) in Abhängigkeit des Referenzmusters (6) durch eine Schnittstelleneinheit (12, 14, 16, 22) der Interaktionsvorrichtung (1), und
- Verarbeiten der erfaßten Eingaben des Benutzers in Abhängigkeit des Referenzmusters (6) durch die Steuereinheit (8).

8. Verfahren gemäß einem der Ansprüche 1 bis 7, mit folgenden Schritten:
- Erfassen von Signalen und/oder Daten eines mit Interaktionsvorrichtung (1) in Verbindung stehenden Datenkommunikationssystems in Abhängigkeit des Referenzmusters (6) durch eine Schnittstelleneinheit (12, 14, 16, 22) der Interaktionsvorrichtung (1), und
- Verarbeiten der erfaßten Signale und/oder Daten des Datenkommunikationssystems in Abhängigkeit des Referenzmusters (6) durch die Steuereinheit (8).

9. Interaktionsvorrichtung (1) zur Interaktion mit einem Druckerzeugnis (Z), mit:
- einer Sensoreinheit (2) zum Erfassen eines auf dem Drukkerzeugnis (Z) angeordneten Referenzmusters und zum Ausgeben von Signalen, die das Referenzmuster wiedergeben, und
- einer mit der Sensoreinheit (2) verbundenen Steuereinheit (8) zum Empfang und zur Verarbeitung der von der Sensoreinheit (2) ausgegebenen Signale, um durch das Referenzmuster bereitgestellte Steueranweisungen und Parameter zu ermitteln, und zur Verarbeitung der Parameter in Abhängigkeit von den Steueranweisungen.

10. Interaktionsvorrichtung (1) gemäß Anspruch 9, **gekennzeichnet durch**
- die Steuereinheit (8) zur Steuerung der Interaktionsvorrichtung (1) in Abhängigkeit des Referenzmusters (6) zur Interaktion mit dem Druckerzeugnis (Z).

11. Interaktionsvorrichtung (1) gemäß Anspruch 9 oder 10 , **gekennzeichnet durch**:
- ein der Steuereinheit (8) zugeordnetes Steuerprogramm, wobei die Steuereinheit (8) das Steuerprogramm in Abhängigkeit des Referenzmusters (6) ausführt

12. Interaktionsvorrichtung (1) gemäß einem der Ansprüche 9 bis 11, **gekennzeichnet durch**:
- eine Schnittstelleneinheit (12, 14, 16, 22) zur Ausgabe von Signalen in Abhängigkeit des Referenzmusters (6), um eine Datenübertragungsverbindung aufzubauen und Daten zu übertragen.

13. Interaktionsvorrichtung (1) gemäß Anspruch 12, **gekennzeichnet durch**:
- die Schnittstelleneinheit (12, 14, 16, 22) zur Ausgabe von Signalen in Abhängigkeit von weiteren der Interaktionsvorrichtung (1) zugeordneten Daten.

14. Interaktionsvorrichtung (1) gemäß Anspruch 12 oder 13, **gekennzeichnet durch**
- die Schnittstelleneinheit (12, 14, 16, 22) Einrichtungen (12) zum Aufbau einer Datenübertragungsverbindung und/oder zur Übertragung von Daten mittels akustischer und/oder induktiver Kopplungen aufweist.

15. Interaktionsvorrichtung (1) gemäß einem der Ansprüche 12 bis 14, **dadurch gekennzeichnet, daß**
- die Schnittstelleneinheit (12, 14, 16, 22) Einrichtungen (14, 22) zur drahtlosen Signalübertragung aufweist.

16. Interaktionsvorrichtung (1) gemäß einem der Ansprüche 12 bis 15, **gekennzeichnet durch**
- die Schnittstelleneinheit (12, 14, 16, 22) zum Empfang von Signalen und zur Übertragung an die Steuereinheit (8), und
- die Steuereinheit (8) zur Steuerung des Betriebs der Interaktionsvorrichtung (1) zur Interaktion mit dem Druckerzeugnis (Z) wenigstens teilweise in Abhängigkeit von den von der Schnittstelleneinheit (12, 14, 16, 22) empfangenen Daten.

17. Interaktionsvorrichtung (1) gemäß einem der Ansprüche 9 bis 16, **gekennzeichnet durch**
- die Sensoreinheit (2) mit wenigstens einem Sensorelement (4) zur optischen Erfassung des Referenzmusters (6).

18. Interaktionsvorrichtung (1) gemäß einem der Ansprüche 9 bis 17, **gekennzeichnet durch**
- eine Bedienungseinheit (18) zur Steuerung der Interaktionsvorrichtung (1) **durch** einen Benutzer.

19. Interaktionsvorrichtung (1) gemäß einem der Ansprüche 9 bis 18, **gekennzeichnet durch**
- einen Zeitgeber (24) zum Betrieb in Abhängigkeit des Referenzmuster (6).

20. Interaktionsvorrichtung (1) gemäß einem der Ansprüche 9 bis 19, **gekennzeichnet durch**
- eine Speichereinheit (20) zur wenigstens teilweisen Speicherung des Referenzmuster (6) und/oder der weiteren der Interaktionsvorrichtung (1) zugeordneten Daten und/oder von **durch** einen Benutzer eingegebenen Daten.

21. Interaktionsvorrichtung (1) gemäß einem der Ansprüche 12 bis 20, **dadurch gekennzeichnet, daß**
- die Schnittstelleneinheit (12, 14, 16, 22) Ausgabeeinrichtungen (16) zur Ausgabe optischer, akustischer Signale und/oder Sprachsignale und/oder graphischer und/oder alphanumerischer Daten aufweist.

22. System zur Interaktion mit einem Druckerzeugnis (z), mit:
- wenigstens einem Rechnersystem (P, A1, ..., An, AS), das zum Betrieb gemäß dem Interaktionsverfahren gemäß einem der Ansprüche 1 bis 8 und/oder mit der Interaktionsvorrichtung (1) gemäß einem der Ansprüche 9 bis 21 ausgelegt ist.

23. Interaktives Druckerzeugnis (Z), mit:
- wenigstens einem Referenzmuster (6) zur Verwendung gemäß dem Interaktionsverfahren gemäß einem der Ansprüche 1 bis 8, und/oder mit der Interaktionsvorrichtung (1) gemäß einem der Ansprüche 9 bis 21, und/oder mit dem Interaktionssystem gemäß Anspruch 22.

24. Referenzmuster (6), mit:
- optisch ausweitbaren graphischen und/oder strukturellen Elementen, die Steueranweisungen und Parameter bereitstellen zur Verwendung
-- gemäß dem Interaktionsverfahren gemäß einem der Ansprüche 1 bis 8, und/oder
-- mit der Interaktionsvorrichtung (1) gemäß einem der Ansprüche 9 bis 21, und/oder
-- mit dem Interaktionssystem gemäß Anspruch 22 und/oder
-- mit dem interaktiven Druckerzeugnis gemäß Anspruch 23.
